# EUROPÄISCHE PATENTANMELDUNG

(11) **EP 1 433 589 A1**
(43) Veröffentlichungstag der Anmeldung: **30.06.2004**
(21) Anmeldenummer: 03405113.6
(22) Anmeldetag: 21.02.2003
(51) Int. Cl.: B29C 70/54, B29C 70/46, B29C 70/48

(54) **Verfahren zur Herstellung von Schichtpressstoffscheiben und Vorrichtung zur Durchführung des Verfahrens**

(30) Priorität: 23.12.2002 EP 02406135
(71) Anmelder: MICAFIL AG, 8048 Zürich (CH)
(72) Erfinder: Piur, Armin, 8957 Spreitenbach (CH); Kessler, Wolfgang, 79713 Bad Säckingen (DE); Schwendener, Daniel, 8335 Hittnau (CH)
(74) Vertreter: ABB Patent Attorneys

(57) **Zusammenfassung**

Das Verfahren dient einer einfachen und wirtschaftlichen Herstellung von mit Anpressdruck beaufschlagbaren Scheiben aus Schichtpressstoff. Bei diesem Verfahren werden folgende Verfahrensschritte ausgeführt:
entweder
Schneiden von deckungsgleichen und mit dem Rand der Scheiben übereinstimmenden Lagen (8) eines Faserwerkstoffs in einer zur Fertigung von mindestens zwei Schichtpressstoffscheiben ausreichenden Anzahl,
Stapeln der Lagen (8) des Faserwerkstoffs in einer Pressform, und
Tränken des eingebrachten Faserwerkstoffs mit einem härtbaren polymeren Harz, oder
Schneiden von deckungsgleichen und mit dem Rand der Scheiben übereinstimmenden Lagen (8) eines mit härtbarem polymerem Harz vorimprägnierten Faserwerkstoffs in einer zur Fertigung von mindestens zwei Schichtpressstoffscheiben ausreichenden Anzahl, und
Stapeln der Lagen (8) des vorimprägnierten Faserwerkstoffs in einer Pressform, nachfolgend Anlegen einer senkrecht zu den Faserwerkstofflagen (8) wirkenden Presskraft,
Härten der mit Presskraft beaufschlagten Faserwerkstofflagen unter Bildung eines Stapelkörpers,
Trennen des Stapelkörpers unter Bildung von Schichtpressstoff-Vorläuferkörpern, und
Nachbearbeiten der Schichtpressstoff-Vorläuferkörper zu den Scheiben.

## Beschreibung

### TECHNISCHES GEBIET

Bei der Erfindung wird ausgegangen von Verfahren zur Herstellung von mit Anpressdruck beaufschlagbaren Scheiben aus Schichtpressstoff. Die Erfindung betrifft auch eine Vorrichtung zur Durchführung des Verfahrens sowie nach dem Verfahren hergestellte Scheiben.

Bei den eingangs genannten Verfahren werden mehrere Lagen eines Faserwerkstoffs mit einem härtbaren polymeren Harz getränkt, die getränkten Lagen mit einer senkrecht zu den Lagen wirkenden Presskraft beaufschlagt, die mit Presskraft beaufschlagten Lagen zu einem Schichtpressstoffkörper gehärtet und der Schichtpressstoffkörper zur Scheibe nachbearbeitet. Als Faserwerkstoff wird hierbei ein im allgemeinen Wirrfasern enthaltendes poröses textiles Flächengebilde verwendet, beispielsweise eine Matte oder ein Vlies, etwa auf der Basis von Kunststoff- oder Glasfasern. Polymere Harze sind vor allem Duromere, wie etwa Epoxide oder Polyester, können gegebenenfalls aber auch gut verarbeitbare Thermoplaste, wie Polyäthylen, Polyamid oder Polycarbonat, umfassen. Die Scheibe kann einen kantig und/oder gerundet oder sonstwie ausgebildeten Rand aufweisen und kann vielseitig eingesetzt werden, beispielsweise als Tellerfeder, Schraubenmutter oder Unterlegscheibe.

### STAND DER TECHNIK

Nach den vorgenannten Verfahren gefertigte Schichtstoffpressscheiben werden von der Patentanmelderin schon seit langem unter dem Markennamen VETRESIT® vertrieben. Im Prospekt Nr. J1215/1 "Spannelemente" der Anmelderin sind solche Scheiben beschrieben. Für eine als Tellerfeder ausgebildete Scheibe für den Apparate- und Elektromaschinenbau wird ein hochwertiger Schichtpressstoff auf der Basis von Glasmatte und duroplastischem Polymer eingesetzt. Zur Fertigung der Tellerfeder werden mehrere Lagen Glasfasermatte übereinandergestapelt, mit duroplastischem Harz getränkt, quer zur Lagenebene verpresst und in einem Ofen gehärtet. Aus einer so gebildeten Schichtpressstoffplatte wird ein Vorläuferkörper der Tellerfeder, etwa durch Sägen in Umfangsrichtung, herausgetrennt und diesen Vorläuferkörper nachfolgend spanabhebend weiterbearbeitet. Durch Drehen wird ein runder Tellerrand mit konisch geführten Stirnflächen und durch Bohren eine in der Tellermitte axial geführte Öffnung zur Aufnahme eines Gewindestabs eingeformt.

Diese umfangreiche Nachbearbeitung der Schichtpressstoffplatte verzögert und verteuert die Herstellung der Tellerfeder erheblich.

### DARSTELLUNG DER ERFINDUNG

Der Erfindung, wie sie in den Patentansprüchen definiert ist, liegt die Aufgabe zugrunde, ein Verfahren der eingangs genannten Art anzugeben, mit dem sich in wirtschaftlich vorteilhafter Weise mechanisch und dielektrisch hochwertige Schichtpressstoffscheiben mit nahezu beliebiger Geometrie herstellen lassen, sowie eine geeignete Vorrichtung zur Durchführung dieses Verfahrens anzugeben.

Beim Verfahren nach der Erfindung werden folgende Verfahrensschritte ausgeführt:
entweder
Schneiden von deckungsgleichen und mit dem Rand der Scheiben übereinstimmenden Lagen eines Faserwerkstoffs in einer zur Fertigung von mindestens zwei Schichtpressstoffscheiben ausreichenden Anzahl,
Stapeln der Lagen des Faserwerkstoffs in einer Pressform, und
Tränken des eingebrachten Faserwerkstoffs mit einem härtbaren polymeren Harz, oder
Schneiden von deckungsgleichen und mit dem Rand der Scheiben übereinstimmenden Lagen eines mit härtbarem polymerem Harz vorimprägnierten Faserwerkstoffs in einer zur Fertigung von mindestens zwei Schichtpressstoffscheiben ausreichenden Anzahl, und
Stapeln der Lagen des vorimprägnierten Faserwerkstoffs in einer Pressform,
nachfolgend Anlegen einer senkrecht zu den Faserwerkstofflagen wirkenden Presskraft,
Härten der mit Presskraft beaufschlagten Faserwerkstofflagen unter Bildung eines Stapelkörpers,
Trennen des Stapelkörpers unter Bildung von Schichtpressstoff-Vorläuferkörpern, und
Nachbearbeiten der Schichtpressstoff-Vorläuferkörper zu den Scheiben.

Wegen einer ausreichend hoch bemessenen Anzahl an Faserwerkstofflagen können aus dem Stapelkörper mindestens zwei Schichtpressstoff-Vorläuferkörper herausgetrennt werden. Dadurch, dass deckungsgleiche und mit dem Rand der Scheibe übereinstimmende Lagen von Faserwerkstoff in der Pressform gestapelt wurden, weisen diese Vorläuferkörper bereits eine an die Ränder der zu fertigenden Schichtpressstoffscheiben weitgehend angenäherte Form auf. Die Nachbearbeitung der Vorläuferkörper zu den Schichtpressstoffscheiben kann daher mit verhältnismässig geringem Aufwand durchgeführt werden. Gegenüber einem als Platte gefertigten Schichtpressstoffkörper nach dem Stand der Technik, bei dem die Vorläuferkörper der zu fertigenden Scheiben mit Hilfe von Umfangsschnitten aus der Platte entfernt werden müssen, fällt praktisch kein Schnittabfall an.

Grundsätzlich können die vorgefertigten Faserwerkstofflagen in einem offenen Pressform mit der Presskraft beaufschlagt werden, da der nach dem Aushärten erhaltene Stapelkörper wegen der vorgefertigten Faserwerkstofflagen einen verhältnismässig gering von den zu fertigenden Scheiben abweichenden Rand aufweist. Zusätzliche Vorteile weist ein weitergebildetes Verfahren auf, bei dem in einer geschlossenen Pressform die Faserwerkstofflagen in Form eines Stapels mit einer Höhe angeordnet werden, welche derart bemessen ist, dass ein als Stab ausgeführter Stapelkörper mit geringer Biegefestigkeit und hoher axialer Druckfestigkeit erzeugt wird, und bei der durch einen oder mehrere radial geführte Schnitte vom Stab die Vorläuferkörper der Scheibe abgelängt werden. In der Pressform wird nämlich der Rand der Scheiben mit hoher Genauigkeit gebildet. Eine Nachbearbeitung der Vorläuferkörper im Randbereich kann daher entfallen. Um eine als Tellerfeder ausgeführte Scheibe zu erzeugen, ist es dann nur mehr notwendig, die beim Ablängen des Schichtpressstoffstabes erzeugten Stirnflächen eines der Vorläuferkörper spanabhebend zu bearbeiten.

Das Ablängen eines Stabes kann entfallen, wenn das erfindungsgemässe Verfahren derart weitergebildet wird, dass beim Stapeln der Faserwerkstofflagen zwischen zwei zur Bildung einer Schichtpressstoffscheibe jeweils ausreichenden Anzahl an Lagen ein dem Auftrennen des Stapelkörpers dienender Trennkörper angeordnet wird. Die nach dem Härten vom Trennkörper begrenzten beiden Schichtpressstoff-Vorläuferkörper können durch Entfernen des Trennkörpers leicht voneinander getrennt werden und bedürfen im allgemeinen nurmehr einer geringen Nachbearbeitung.

Mit Vorteil wird ein Trennkörper verwendet, in den zwei Oberflächen eingeformt sind, die jeweils eine der beiden Stirnflächen der zu fertigenden Scheiben bestimmen. Ein spanabhebendes Bearbeiten der Stirnflächen der vom Trennkörper begrenzten Schichtpressstoff-Vorläuferkörper ist nun nicht mehr notwendig. Aus solchermassen hergestellten Schichtpressstoff-Vorläuferkörpern gefertigte Scheiben zeichen sich zudem durch eine hohe Festigkeit aus, da ein beim spanabhebenden Bearbeiten sonst nicht zu vermeidendes Anschneiden von Fasern der Faserwerkstofflagen entfällt.

Die Schichtpressstoff-Vorläuferkörper weisen mit den zu fertigenden Scheiben übereinstimmende Abmessungen auf, wenn auf dem Trennkörper ein Distanzring angeordnet wird. Nachbearbeitung ist dann nur noch notwendig, wenn in die Scheiben zusätzlich noch Öffnungen und/oder Nuten, beispielsweise zur Führung eines Gewindebolzens oder für ein Innengewinde einer als Mutter ausgebildeten Scheibe, eingeformt werden.

Eine zur Durchführung des erfindungsgemässen Verfahrens geeignete Vorrichtung nach der Erfindung zeichnet sich dadurch aus, dass eine Pressform vorgesehen ist mit einem zylinderförmig ausgebildeten Druckraum, der eine im Verhältnis zum Durchmesser grosse Höhe aufweist. Mit einer solchen Vorrichtung kann gut verdichteter Schichtpressstoff für eine grosse Anzahl von Scheiben gefertigt werden. Wird eine weitgehend bläschenfreie Tränkung der in die Pressform eingebrachten Faserwerkstofflagen angestrebt, so sollte der Druckraum der erfindungsgemässen Vorrichtung evakuierbar ausgebildet sein.

Mit Vorteil ist bei der erfindungsgemässen Vorrichtung der Druckraum durch etagenartig angeordnete Trennkörper unterteilt, da so weitgehend an die herzustellenden Scheiben angepasste und leicht zu entformende Schichtpressstoff-Vorläuferkörper erzeugt werden. Bei einer solchermassen ausgeführten Vorrichtung wird die Tränkung begünstigt, wenn die Trennkörper eine (vorzugsweise zentral positionierte) Durchtrittsöffnung für das polymerer Harz aufweisen.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen axial geführten Schnitt durch eine axialsymmetrisch ausgebildete erste Ausführungsform einer Pressform einer Vorrichtung zur Durchführung des erfindungsgemässen Verfahrens nach dem Einbringen mehrerer Lagen Glasfasermatte,
- Fig.2: die Pressform gemäss Fig.1 nach dem Tränken der Glasfasermatte mit einem härtbaren Polymer, Verpressen der getränkten Matte und Aushärten des Polymers bei verpresster Matte.
- Fig.3: eine Aufsicht auf einen axial geführten Schnitt durch eine axialsymmetrisch ausgebildete zweite Ausführungsform einer Pressform einer Vorrichtung zur Durchführung des erfindungsgemässen Verfahrens nach dem Einbringen mehrerer Lagen Glasfasermatte, welche Lagen gruppenweise zwischen jeweils zwei Trennkörpern angeordnet sind,
- Fig.4: eine Aufsicht auf einen axial geführten Schnitt durch einen in der Pressform gemäss Fig.3 verwendeten scheibenförmigen Trennkörper, und
- Fig.5: die Pressform gemäss Fig.3 nach dem Tränken der Glasfasermatte mit einem härtbaren Polymer, Verpressen der getränkten Matte und Aushärten des Polymers bei verpresster Matte.

### WEG ZUR AUSFÜHRUNG DER ERFINDUNG

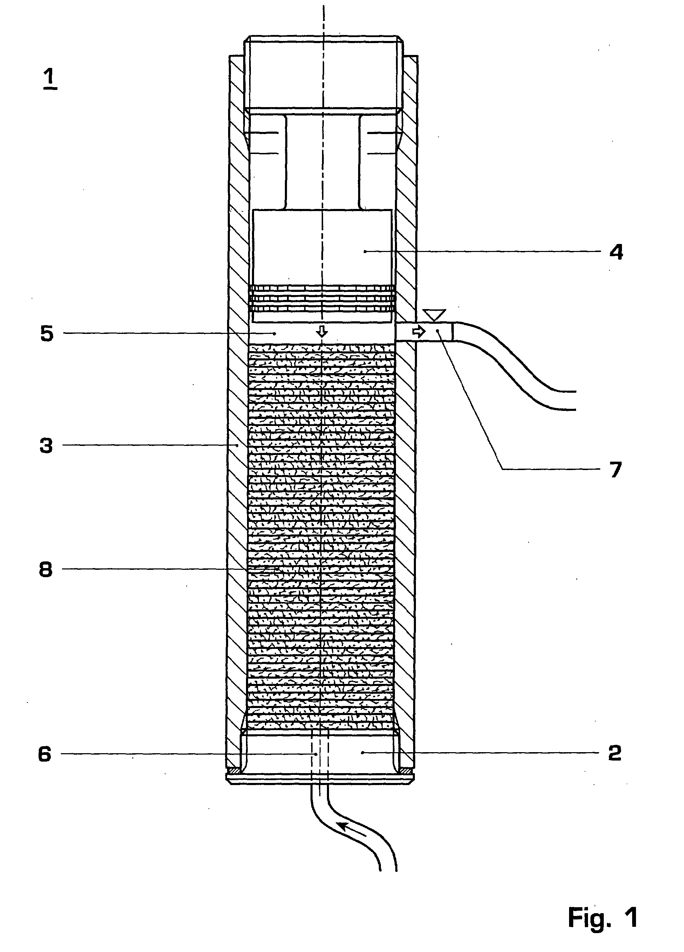

In den Figuren beziehen sich gleiche Bezugszeichen auf gleichwirkende Teile. In Fig. 1 bezeichnet 1 eine Pressform. Die Pressform 1 ist Teil einer Vorrichtung zur Durchführung des erfindungsgemässen Verfahrens und weist einen mit einem Boden 2 abgeschlossenen Zylinder 3 und einen im Zylinder 3 druckdicht gleitenden Kolben 4 auf, welcher einen vom Zylinder 3 und vom Zylinderboden 2 begrenzten Druckraum 5 nach oben abschliesst. Durch den Zylinderboden 2 ist ein Einlass 6 geführt. Der Einlass 6 ist verbunden mit einem nicht dargestellten Behälter zur Aufnahme einer härtbaren polymeren Flüssigkeit auf der Basis eines duroplastischen Polymers, beispielsweise eines Epoxidharzes. Durch die Wand des Zylinders 3 ist ein Einlass 7 einer ebenfalls nicht dargestellten Vakuumanlage geführt.

Im Druckraum 5 ist ein von mehreren deckungsgleich zugeschnittenen Lagen Glasfasermatte 8 gebildeter Stapel angeordnet. Die Lagen 8 sind so zugeschnitten, dass sie mit ihrem Rand an der Innenwand des Zylinders 3 anliegen. Typische Glasfasermatte weist eine Flächendichte von beispielsweise 450 g/m² auf. Die Lagen 8 können nach Entfernen des Zylinderbodens 2 oder des Kolbens 4 in den Druckraum 5 eingebracht werden. Durch Evakuieren des Druckraums 5 nach dem Einbringen der Glasfasermatte 8 und nachfolgendes - vorzugsweise bei Raumtemperatur - erfolgenden Befüllen des Druckraums 5 mit Polymer unter Vakuum wird eine bläschenfreie Tränkung der Glasfasermatte 8 mit dem Polymer erreicht. Die getränkte Glasfasermatte wird nachfolgend mit Hilfe des Kolbens 4 axial um ein Vielfaches verdichtet. Hierbei wird überschüssiges Polymer durch eine im Kolben 4 vorgesehene, nicht dargestellte Axialbohrung aus dem Druckraum 5 entfernt.

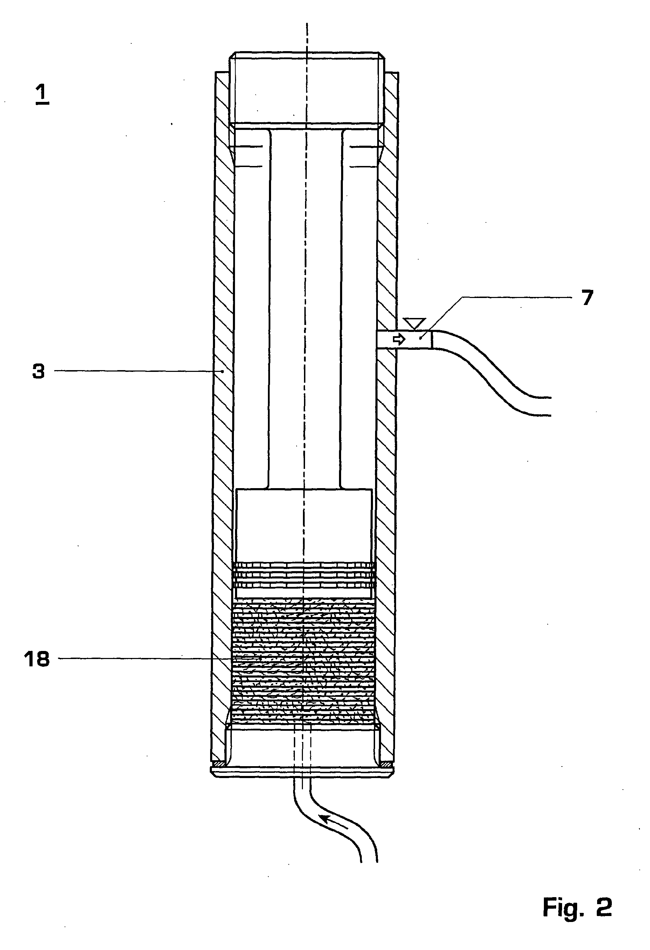

Wie aus Fig.2 ersichtlich ist, weist ein nach dem Aushärten bei erhöhten Temperaturen gebildeter Stapelkörper 18 die Form eines Stabes auf. Bedingt durch die Schichtstruktur der lageweise angeordneten Glasfasern zeichnet sich ein solcher Stab durch eine geringe Biege- aber eine hohe axiale Druckfestigkeit aus. Durch Trennen des Stabes mittels radial geführter Parallelschnitte können so Schichtpressstoff-Vorläuferkörper der zu fertigenden Scheiben mit hoher axialer Druckfestigkeit hergestellt werden. Durch Eindrehen von zueinander parallel liegenden Randflächen in die Stirnseiten können aus diesen Vorläuferkörpern rundscheibenförmige Tellerfedern hergestellt werden.

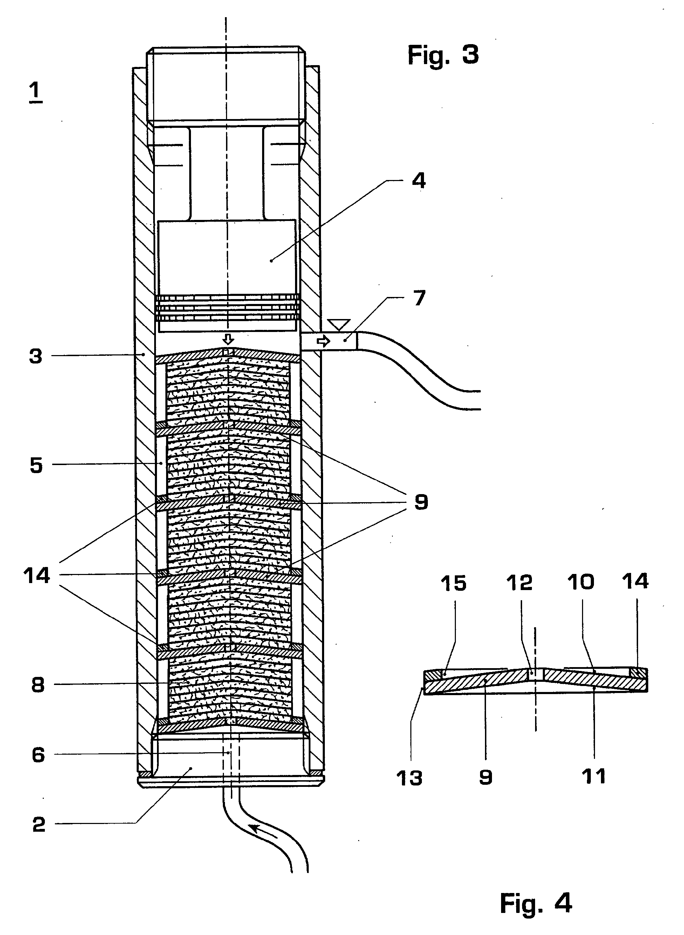

Im Unterschied zur Pressform nach Fig.1 sind bei der in Fig.3 dargestellten Pressform im Druckraum 5 etagenweise übereinanderangeordnete, starre beispielsweise aus Stahl geformte, Trennkörper 9 vorgesehen. Gemäss Fig.4 ist ein solcher Trennkörper im wesentlich rundscheibenförmig ausgeführt. In den Trennkörper 9 sind die Stirnseiten der herzustellenden Scheiben bestimmende Oberflächen 10, 11 eingeformt sowie eine zentral angeordnete Öffnung 12, welche beim Tränken und beim Verpressen den Durchtritt von Polymer sicherstellt. Der Rand 13 des Trennkörpers 9 weist einen etwas geringeren Durchmesser auf als der Zylinder 3 und zwar derart, dass der Trennkörper im Zylinder verkantungsfrei gleiten kann. Zwischen je zwei benachbarten, eine Etage bildenden Trennkörpern 9 ist ein Distanzring 14 angeordnet. Dieser Distanzring 14 ist auf dem unteren der beiden benachbarten Trennkörper 9 aufgesetzt und ist entsprechend der Dicke der zu fertigenden Scheibe axial erstreckt. Zudem weist er eine dem Rand der zu fertigenden Scheibe entsprechende Innenfläche 15 auf.

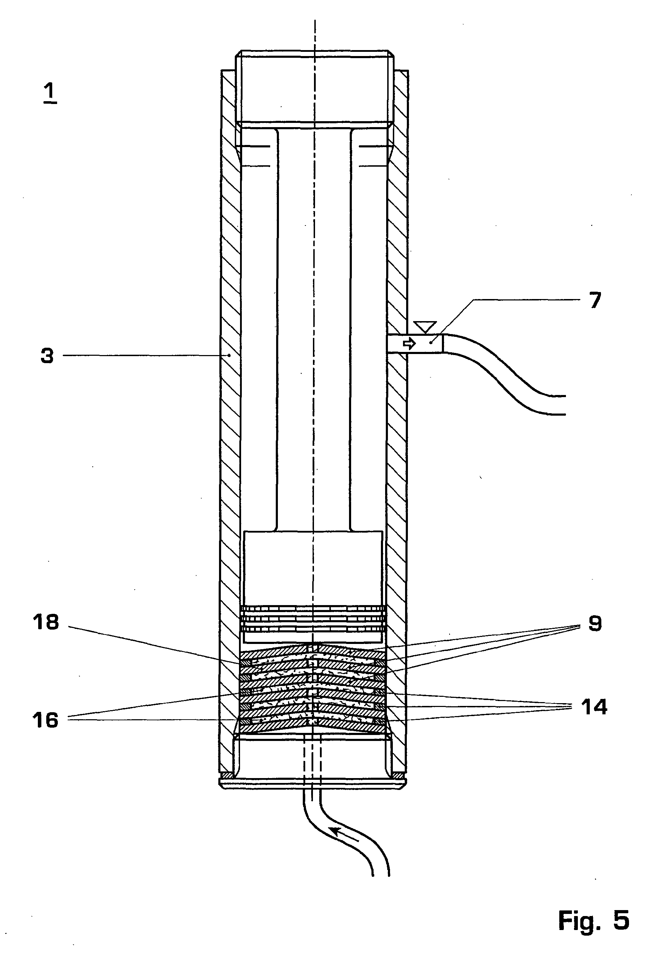

Wie in Fig.3 dargestellt ist, sind zwischen je zwei benachbarten Trennkörpern 9 mehrere deckungsgleiche Lagen Glasfasermatte 8 gestapelt. Der Durchmesser der Lagen entspricht dem Innendurchmesser des Distanzringes 14. Nach dem Tränken der Lagen 8 mit dem Polymer entsprechend der Vorrichtung nach Fig.1 wird nun mit dem Kolben 4 axial in Richtung eines in Fig.3 im Druckraum 5 dargestellten Pfeils solange verdichtet, bis die oben auf den Lagenstapeln aufliegenden Trennkörper 9 auf den darunter angeordneten Distanzringen 14 aufsitzen. Nach dem Aushärten bilden die Trennkörper 9 mit den Distanzringen 14 einen stabförmigen Stapelkörper 18 (Fig.5). Das von zwei benachbarten Trennkörpern 9 und dem dazwischen befindlichen Distanzring 14 umschlossene Volumen enthält dann einen Schichtpressstoff-Vorläuferkörper 16 mit den einer Tellerfeder entsprechenden Abmessungen. Durch nachträgliches Einbringen einer zentral geführten Bohrung in den Schichtpressstoffkörper nach dessen Entformung kann so in besonders einfacher Weise eine Tellerfeder gefertigt werden.

Zur Fertigung eines Schichtpressstoff-Vorläuferkörpers für eine Tellerfeder mit einem Aussendurchmesser von 58 mm, einem Innendurchmesser von 20,5 mm (zum Durchführen eines Gewindebolzens von 20 mm Durchmesser), einer Tellerdicke von 6,1 mm und einem Federweg von 1,2 mm wird ein Distanzring 14 mit einem Innendurchmesser von 58 mm und einer Länge in axialer Richtung von 7,3 mm verwendet und werden 16 Lagen Glasfasermatte mit einer Flächendichte von 450 g/cm² zwischen zwei benachbarten Trennkörpern 9 aufgestapelt. Die durch geringfügige Nachbearbeitung aus diesem Schichtpressstoff-Vorläuferkörper gefertigte Tellerfeder weist bei Raumtemperatur bei Belastungen bis zu 16 kN einen linearen Federweg auf.

In einer alternativen Ausführungsform einer Vorrichtung zur Durchführung des erfindungsgemässen Verfahrens kann eine Pressform 1 verwendet werden, welche weder evakuierbar ist noch einen Eingang für ein Tränkharz aufweist. In diese Pressform werden Lagen 8 aus vorimprägniertem Faserwerkstoff (Prepregs) gestapelt und aus dem Prepregstapel durch Anlegen von Presskraft und Aushärten der Stapelkörper 18 gebildet. Für die Vorimprägnierung wird das zuvor bereits beschriebene härtbare polymere Harz verwendet.

### Bezugszeichenliste

- 1: Pressform
- 2: Zylinderboden
- 3: Zylinder
- 4: Kolben
- 5: Druckraum
- 6, 7: Einlasse
- 8: Lagen von Glasfasermatte
- 9: Trennkörper
- 10, 11: Oberflächen
- 12: Öffnung
- 13: Rand
- 14: Distanzring
- 15: Innenfläche
- 16: Schichtpressstoff-Vorläuferkörper
- 18: Stapelkörper, Stab

## Patentansprüche

1. Verfahren zur Herstellung von mit Anpressdruck beaufschlagbaren Scheiben aus Schichtpressstoff, bei dem folgende Verfahrensschritte ausgeführt werden:
entweder
Schneiden von deckungsgleichen und mit dem Rand der Scheiben übereinstimmenden Lagen (8) eines Faserwerkstoffs in einer zur Fertigung von mindestens zwei Schichtpressstoffscheiben ausreichenden Anzahl,
Stapeln der Lagen (8) des Faserwerkstoffs in einer Pressform, und
Tränken des eingebrachten Faserwerkstoffs mit einem härtbaren polymeren Harz,
oder
Schneiden von deckungsgleichen und mit dem Rand der Scheiben übereinstimmenden Lagen (8) eines mit härtbarem polymerem Harz vorimprägnierten Faserwerkstoffs in einer zur Fertigung von mindestens zwei Schichtpressstoffscheiben ausreichenden Anzahl, und
Stapeln der Lagen (8) des vorimprägnierten Faserwerkstoffs in einer Pressform,
nachfolgend Anlegen einer senkrecht zu den Faserwerkstofflagen (8) wirkenden Presskraft,
Härten der mit Presskraft beaufschlagten Faserwerkstofflagen unter Bildung eines Stapelkörpers (18),
Trennen des Stapelkörpers (18) unter Bildung von Schichtpressstoff-Vorläuferkörpern (16), und
Nachbearbeiten der Schichtpressstoff-Vorläuferkörper (16) zu den Scheiben.

2. Verfahren nach Anspruch 1, **dadurch gekennzeichnet, dass** die Faserwerkstofflagen (8) in Form eines Stapels mit einer Höhe angeordnet werden, welche derart bemessen ist, dass ein als Schichtpressstoffstab ausgeführter Stapelkörper (18) mit geringer Biegefestigkeit und hoher axialer Druckfestigkeit erzeugt wird, und dass durch einen oder mehrere senkrecht zur Stabachse geführte Schnitte vom Schichtpresstoffstab die Vorläuferkörper der Scheibe abgelängt werden

3. Verfahren nach Anspruch 2, **dadurch gekennzeichnet, dass** zwei durch das Ablängen erzeugte Stirnflächen eines der Vorläuferkörper spanabhebend bearbeitet werden unter Bildung einer als Tellerfeder ausgeführten Scheibe.

4. Verfahren nach Anspruch 1, **dadurch gekennzeichnet, dass** beim Stapeln der Faserwerkstofflagen (8) zwischen zwei Lagen (8) ein dem Auftrennen des Stapelkörpers (18) dienender Trennkörper (9) angeordnet wird.

5. Verfahren nach Anspruch 4, **dadurch gekennzeichnet, dass** auf dem Trennkörper (9) ein Distanzring (14) angeordnet wird.

6. Verfahren nach einem der Ansprüche 4 oder 5, **dadurch gekennzeichnet, dass** ein Trennkörper (9) verwendet wird, in den zwei Oberflächen (10, 11) eingeformt sind, die jeweils eine der beiden Stirnfläche der zu fertigenden Scheiben bestimmen.

7. Vorrichtung zur Durchführung des Verfahrens nach Anspruch 1 mit einer Pressform (1), **dadurch gekennzeichnet, dass** die Pressform (1) einen zylinderförmig ausgebildeten Druckraum (5) aufweist mit einer im Verhältnis zum Durchmesser grossen Höhe.

8. Vorrichtung nach Anspruch 7, **dadurch gekennzeichnet, dass** der Druckraum (5) evakuierbar ausgebildet ist.

9. Vorrichtung nach einem der Ansprüche 7 oder 8, **dadurch gekennzeichnet, dass** der Druckraum (5) durch etagenartig angeordnete Trennkörper (9) unterteilt ist.

10. Vorrichtung nach Anspruch 9, **dadurch gekennzeichnet, dass** die Trennkörper (9) jeweils eine Durchtrittsöffnung (12) für das polymerer Harz aufweisen.

11. Schichtpressstoffscheibe, hergestellt mit dem Verfahren gemäss einem der Ansprüche 1 bis 6.
